# EUROPEAN PATENT APPLICATION

(11) **EP 1 688 323 A1**
(43) Date of publication of application: **09.08.2006**
(21) Application number: 06001464.4
(22) Date of filing: 24.01.2006
(51) Int. Cl.: B60R 21/20, B60N 2/427

(54) **Occupant protection device**

(30) Priority: 04.02.2005 JP 2005029384; 24.03.2005 JP 2005086361
(71) Applicant: TAKATA CORPORATION, Minato-ku, Tokyo 106-8510 (JP)
(72) Inventor: Hiruta, Teruhiko, Minato-ku Tokyo 106-8510 (JP); Koshikawa, Kimihiro, Minato-ku Tokyo 106-8510 (JP)
(74) Representative: Vossius & Partner

(57) **Abstract**

To provide an occupant protection device in which a bag is inflated smoothly without interfering with a horizontal member, such as a seat spring. An occupant protection device 10 includes a seat pan 8 bridged between front portions of side frames 1a, 1b of a seat; a bag 12 disposed on the seat pan 8; and a gas generator 14 for inflating the bag 12. The bag 12 extends in the left-right direction of the seat pan 8 and has its opposite ends linked with the seat pan 8 via respective anchors 16. A posterior portion of a guide cloth 20 is wrapped around one of spring components of a seat spring 9 disposed directly behind the bag 12. An anterior portion of the guide cloth 20 extends below the bag 12 and is connected to an wrapping member 13. During an inflation process of the bag 12, the guide cloth 20 guides the bag 12 so that the bag 12 is inflated upward smoothly without entering a space below the seat spring 9 (Fig. 1).

## Description

The present invention relates to occupant protection devices for protecting occupants on seats of vehicles, such as automobiles, during collisions, and particularly, it relates to an occupant protection device that restrains a lumbar region of an occupant from moving forward when a vehicle is involved in a frontal collision.

In order to prevent a so-called submarine phenomenon in which an occupant who wears a seatbelt slips through a space below a lap belt when a vehicle is involved in a frontal collision, JP-A-2002-79861 (Patent Document 1) discloses an occupant protection device as a system for protecting an occupant inside a vehicle during a collision. In such an occupant protection device, a front portion of a seat cushion is raised or is made firm during a collision of a vehicle.

JP-A-2002-79861 describes a structure in which a bag is inflated in upward and backward directions.

According to the occupant protection device disclosed in JP-A-2002-79861, a horizontal member, such as a seat spring, is provided posterior to the bag. According to such a structure, however, the bag could possibly interfere with the seat spring during the inflation process.

Accordingly, it is an object of the present invention to provide an occupant protection device in which a bag is inflated smoothly without interfering with a horizontal member, such as a seat spring.

An occupant protection device set forth in Claim 1 includes a seat pan disposed below a seat cushion; an inflatable bag which is disposed on the seat pan and pushes against a front portion of the seat cushion from below; a gas generator for inflating the bag when a vehicle is in an emergency situation; a horizontal member disposed posterior to the bag and extending in a left-right direction of the seat pan; and a guide member for guiding the bag upward during an inflation process of the bag so as to prevent the bag and the horizontal member from interfering with each other during the inflation process.

An occupant protection device set forth in Claim 2 includes a seat pan disposed below a seat cushion; an inflatable bag which is disposed on the seat pan and pushes against a front portion of the seat cushion from below; a gas generator for inflating the bag when a vehicle is in an emergency situation; and a horizontal member disposed posterior to the bag and extending in a left-right direction of the seat pan. A back portion of the bag overlaps the horizontal member from above during an inflation process of the bag.

According to the occupant protection device as set forth in Claim 3, in one of Claims 1 and 2, the horizontal member is preferably defined by a seat spring.

According to the occupant protection device as set forth in Claim 4, in Claim 1, the horizontal member is preferably defined by a seat spring, and moreover, the guide member is preferably disposed below the seat spring and may be elastically compressed and deformed by receiving a pushing force from the seat spring from above, the pushing force being generated when an occupant is seated on the seat cushion. Furthermore, a spring constant of the guide member in a compressively deformed state is preferably set lower than a spring constant of the seat spring deformed in the downward direction.

According to the occupant protection device set forth in Claim 1, the bag is guided by the guide member during the inflation process and is thus inflated upward smoothly without interfering with the horizontal member, which may be, for example, a seat spring.

According to the occupant protection device set forth in Claim 2, the back portion of the bag overlaps the horizontal member from above during the inflation process of the bag so that the bag can be inflated upward smoothly without being interfered by the horizontal member.

According to Claim 3, the present invention is suitable for a vehicle that is provided with a seat spring as the horizontal member.

According to the occupant protection device set forth in Claim 4, when an occupant is seated on the seat cushion, the seat spring is deformed downward in its sinking direction. Even though the seat spring pushes against the guide member in response to this downward deformation, the reactive force received by the seat spring from the guide member is small. Accordingly, the seated occupant is prevented from feeling a sense of discomfort.

Embodiments of the present invention will now be described with reference to the drawings.
Fig. 1 is a perspective view of a seat frame assembly equipped with an occupant protection device according to an embodiment of the present invention;
Fig. 2 includes a cross-sectional view (a) taken along line II-II in Fig. 1, and a cross-sectional view (b) of a bag in an inflated state;
Fig. 3 includes cross-sectional views of the bag and its peripheral components of an occupant protection device according to another embodiment; and
Fig. 4 includes cross-sectional views of the bag and its peripheral components of an occupant protection device according to yet another embodiment.

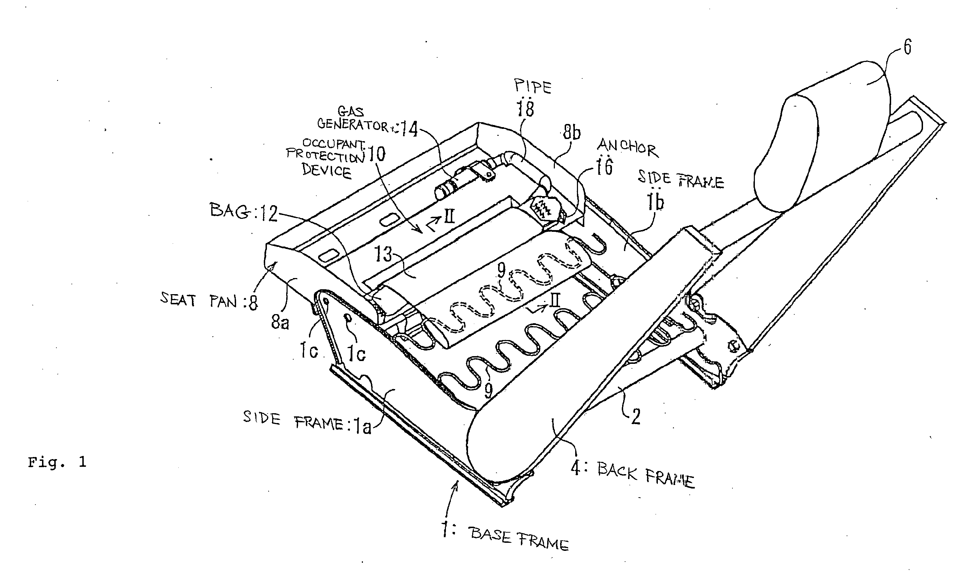

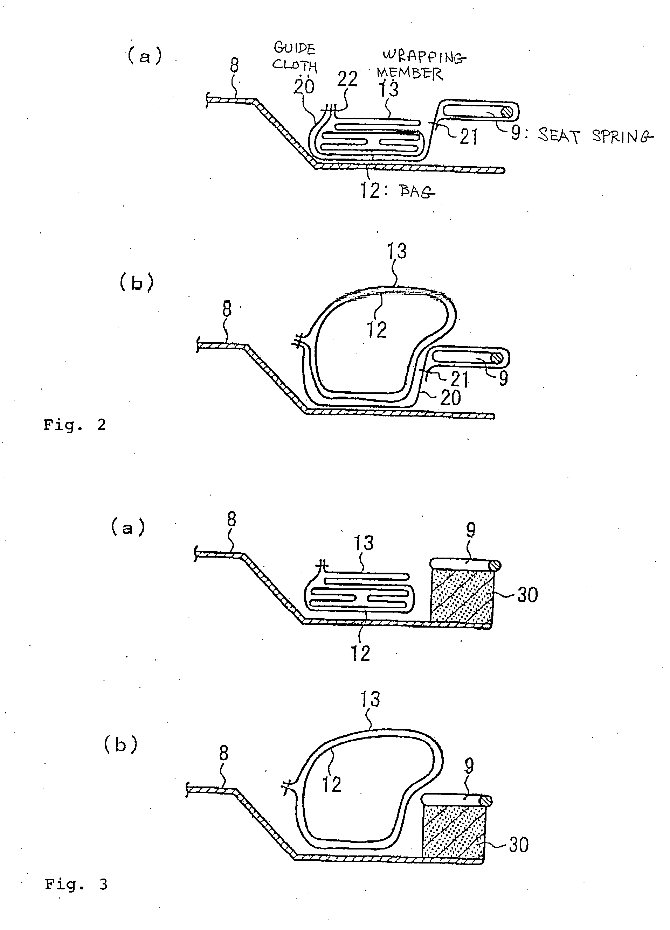

Fig. 1 is a perspective view of a seat frame assembly equipped with an occupant protection device according to an embodiment of the present invention. Fig. 2(a) is a cross-sectional view taken along line II-II in Fig. 1. Fig. 2(b) is a cross-sectional view of a bag in an inflated state.

The frame assembly of a vehicle seat includes a base frame 1 and a back frame 4 which is rotatably connected with the base frame 1 via a supporting shaft 2 and a reclining device (not shown). An upper portion of the back frame 4 has a headrest 6 attached thereto.

The base frame 1 includes a pair of left and right side frames 1a, 1b. A seat pan 8 is bridged between front portions of the side frames 1a, 1b. Opposite ends of the seat pan 8 with respect to the left-right direction thereof are respectively provided with side walls 8a, 8b that overlap the inner side surfaces of the side frames 1a, 1b (i.e. the side surfaces of the side frames 1a, 1b facing each other). The overlapping portions between the side frame 1a and the side wall 8a and between the side frame 1b and the side wall 8b are provided with through holes 1c through which fixing members (not shown), such as bolts, are inserted.

The seat pan 8 is disposed between the side frames 1a, 1b in such a manner that the side walls 8a, 8b respectively overlap the inner side surfaces of the side frames 1a, 1b. The overlapping portions between the side frame 1a and the side wall 8a and between the side frame 1b and the side wall 8b are fastened to each other with bolts and nuts via the through holes 1c, whereby the seat pan 8 is fixed between the side frames 1a, 1b.

Moreover, a seat spring 9 is disposed posterior to the seat pan 8 and is bridged between the side frames 1a, 1b.

Although not shown in the drawings, a seat cushion composed of, for example, urethane extends from the seat spring 9 to the upper side of the seat pan 8. The seat pan 8 is disposed below the front portion of this seat cushion.

An occupant protection device 10 is defined by the seat pan 8, an inflatable bag 12 which is disposed on the seat pan 8 and pushes against the front portion of the seat cushion from below, and a gas generator 14 for inflating the bag 12.

In this embodiment, an wrapping member 13 for wrapping the bag 12 is provided, which allows the bag 12 to be inflated into a tubular shape. Specifically, the wrapping member 13 is formed of a cloth material sewn into a tubular shape, and has a hollow opening through which the bag 12 extends.

The bag 12 extends in the left-right direction of the seat pan 8 and has its left and right ends linked with the seat pan 8 via anchors 16 which are fixed on the upper surface of the seat pan 8.

In this embodiment, the gas generator 14 is cylindrical and is disposed along the upper surface of the seat pan 8 such that the gas generator 14 is axially parallel to the left-right direction of the seat pan 8. However, the positioning of the gas generator 14 is not limited to the position mentioned above.

The gas generator 14 is connected with the bag 12 via a pipe 18. The pipe 18 is disposed along the upper surface of the seat pan 8.

According to this embodiment, a posterior half portion of guide cloth 20 is wrapped around the frontmost spring component included in the seat spring 9. The guide cloth 20 has a stitched section 21 by which the posterior half portion is made into a tubular shape. Consequently, this tubular portion is fit onto the frontmost spring component of the seat spring 9.

Alternatively, the stitched section 21 may be omitted. In that case, the posterior half portion of the guide cloth 20 may simply be hung on the frontmost spring component of the seat spring 9. Furthermore, the guide cloth 20 may be disengaged from the seat spring 9 after the inflation.
- 8 -

An anterior half portion of the guide cloth 20 extends below the bag 12 and is sewn on the wrapping member 13 via a stitched section 22. Although the stitched section 22 is disposed at an upper front position of the bag 12, the stitched section 22 may be slightly shifted from this position.

The operation of the occupant protection device 10 will now be described.

When a frontal collision of a vehicle is detected, the gas generator 14 emits gas. The gas from the gas generator 14 flows into the bag 12 via the pipe 18 so as to inflate the bag 12. As a result, the front portion of the seat cushion is pushed upward or becomes firm, thereby restraining a lumbar region of an occupant from moving forward.

In this embodiment, the guide cloth 20 is wrapped around the frontmost spring component of the seat spring 9 and extends below the bag 12 so as to be connected to the wrapping member 13. Consequently, during the inflation process, the guide cloth 20 is stretched between the bag 12 and the seat spring 9 in a curtain-like manner so that the bag 12 is prevented from entering the space below the seat spring 9. Accordingly, as shown in Fig. 2(b), the bag 12 is inflated upward smoothly without interfering with the seat spring 9.

Fig. 3(a) is a cross-sectional view of the bag 12 and its peripheral components included in the occupant protection device 10 according to another embodiment of the present invention. In this embodiment, the guide cloth 20 is omitted, and alternatively, a guide block 30 is provided. The guide block 30 is disposed between the frontmost spring component of the seat spring 9 and a section of the seat pan 8 directly below the frontmost spring component of the seat spring 9. Moreover, the guide block 30 is formed of an elastic material, which may be, for example, rubber or foamed synthetic resin (i.e. an elastic material that can be deformed as the seat spring 9 is elastically deformed). A front surface of the guide block 30 is substantially flush with the front end of the frontmost spring component of the seat spring 9.

As shown in Fig. 3(b), during the inflation process of the bag 12, the guide block 30 prevents the bag 12 from entering the space below the seat spring 9. Accordingly, the bag 12 can be inflated upward smoothly while being guided by the guide block 30.

The guide block 30 may be in contact with or slightly spaced from the undersurface of the seat spring 9. If the guide block 30 is slightly spaced from the undersurface of the seat spring 9, however, the distance between the seat spring 9 and the guide block 30 is preferably small enough to an extent that the bag 12 does not enter the gap between the seat spring 9 and the guide block 30.

According to the above structure in which the guide block 30 is in contact with the seat spring 9 or is disposed close to the seat spring 9, when an occupant is seated on the seat cushion, the seat spring 9 is deformed downward in its sinking direction. The seat spring 9 thus pushes against the guide block 30 from above, whereby the guide block 30 becomes compressively deformed.

In this case, the spring constant of the guide block 30 in the compressively deformed state is set lower than the spring constant of the seat spring 9 deformed in the downward direction. This reduces the reactive force received by the seat spring 9 from the guide block 30 during the downward deformation of the seat spring 9 so as not to give the seated occupant a sense of discomfort.

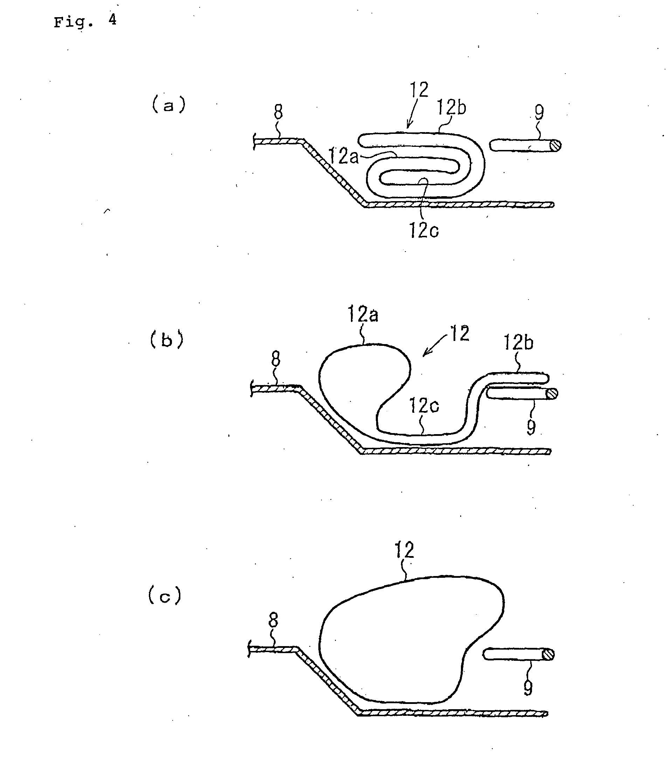

Fig. 4(a) is a cross-sectional view of the bag 12 and its peripheral components according to yet another embodiment of the present invention.

In this embodiment, a front portion 12a of the bag 12 is folded back over an intermediate portion 12c with respect to the front-back direction of the bag 12. A back portion 12b of the bag 12 is folded over the folded front portion 12a. In order to maintain this folded shape, the back portion 12b, the front portion 12a, and the intermediate portion 12c may be sewn together using a low-strength thread (i.e. a tear seam) or may be joined together using a low-bonding-strength adhesive in the state shown in Fig. 4(a). Although the wrapping member 13 is not shown in Fig. 4 for the purpose of providing a clear understanding of the drawings, the wrapping member 13 is actually provided.

The inflation process of the bag 12 having the above-described structure will now be described. First, as shown in Fig. 4(b), the back portion 12b is deployed backward so as to overlap the seat spring 9 from above. The front portion 12a is then inflated in front of the intermediate portion 12c. Subsequently, as shown in Fig. 4(c), the entire bag 12 including the intermediate portion 12c is inflated. In this case, since the back portion 12b is disposed over the seat spring 9 from above and also covers the front side of the seat spring 9 in a curtain-like manner, the bag 12 can be inflated upward smoothly without interfering with the seat spring 9.

The embodiments described above are only examples of the present invention, and therefore, the present invention is not limited to the above-described embodiments. For example, according to the present invention, the embodiments shown in Figs. 2 and 4 may alternatively be provided with the guide block 30 shown in Fig. 3. Furthermore, the bag 12 in Figs. 2 and 3 may alternatively be folded back as in Fig. 4.

## Claims

1. An occupant protection device comprising:
a seat pan disposed below a seat cushion;
an inflatable bag which is disposed on the seat pan and pushes against a front portion of the seat cushion from below;
a gas generator for inflating the bag when a vehicle is in an emergency situation;
a horizontal member disposed posterior to the bag and extending in a left-right direction of the seat pan; and
a guide member for guiding the bag upward during an inflation process of the bag so as to prevent the bag and the horizontal member from interfering with each other during the inflation process.

2. An occupant protection device comprising:
a seat pan disposed below a seat cushion;
an inflatable bag which is disposed on the seat pan and pushes against a front portion of the seat cushion from below;
a gas generator for inflating the bag when a vehicle is in an emergency situation; and
a horizontal member disposed posterior to the bag and extending in a left-right direction of the seat pan,
wherein a back portion of the bag overlaps the horizontal member from above during an inflation process of the bag.

3. The occupant protection device according to one of Claims 1 and 2, wherein the horizontal member comprises a seat spring.

4. The occupant protection device according to Claim 1,2 or 3, wherein the horizontal member comprises a seat spring,
wherein the guide member is disposed below the seat spring and is elastically compressed and deformed by receiving a pushing force from the seat spring from above, the pushing force being generated when an occupant is seated on the seat cushion, and
wherein a spring constant of the guide member in a compressively deformed state is set lower than a spring constant of the seat spring deformed in the downward direction.
